# EUROPEAN PATENT APPLICATION

(11) **EP 1 715 541 A1**
(43) Date of publication of application: **25.10.2006**
(21) Application number: 05704028.9
(22) Date of filing: 18.01.2005
(51) Int. Cl.: H01M 8/02, H01M 8/10

(54) **ELECTROLYTE MATERIAL FOR FUEL CELL**

(30) Priority: 09.02.2004 JP 2004032103
(71) Applicant: Toyota Jidosha Kabushiki Kaisha, Toyota-shi, Aichi-ken, 471-8571 (JP)
(72) Inventor: SAITO, Toshiya, c/o Toyota Jidosha K. K., Toyota-shi, ichi 4718571 (JP); HASE, Kohei, c/o Toyota Jidosha K. K., Toyota-shi, Aichi 4718571 (JP)
(74) Representative: Benson, John Everett
(86) International application number: PCT/JP2005/000817
(87) International publication number: WO 2005/076398

(57) **Abstract**

There is provided an electrolyte material for a fuel cell having a high proton conductivity even in a state without humidification or moisture. The object is achieved by the electrolyte material for a fuel cell having a proton conductive system at least comprising (a) a Brönsted acid and (b) a base having a lone electron-pair, wherein the base (b) has a structure in which one or more groups are added to a group having the lone electron-pair, and a total number of constitutional atoms other than H atom included in all the added group is three or less.

## Description

### Technical Field

The present invention relates to an electrolyte material used for forming a proton conductive portion of a fuel cell, such as an electrolyte membrane and the like.

### Background Art

In general, fuel cells are operated more effectively in a temperature environment more than 100°C, from the viewpoint of improving the energy efficiency and increasing the output power. Therefore, electrolyte materials for forming electrolyte membranes of fuel cells are required to have a high proton conductivity also in the temperature environment more than 100°C. Furthermore, in order to expand a temperature range for starting (activating) fuel cells, electrolyte materials for fuel cells are required to have a certain extent of the proton conductivity, even in a low temperature environment. Therefore, electrolyte materials for fuel cells are desirable to have a good proton conductivity in a temperature range from at least a room temperature to 100°C or more.

In general, fuel cells are operated more effectively in a temperature environment more than 100°C, from the viewpoint of improving the energy efficiency and increasing the output power. Therefore, electrolyte materials for forming electrolyte membranes of fuel cells are required to have a high proton conductivity also in the temperature environment more than 100°C. Furthermore, in order to expand a temperature range for starting (activating) fuel cells, electrolyte materials for fuel cells are required to have a certain extent of the proton conductivity, even in a low temperature environment. Therefore, electrolyte materials for fuel cells are desirable to have a good proton conductivity in a temperature range from at least a room temperature to 100°C or more.

Perfluorocarbon sulfonic acid such as "Nafion®" typically has a superior proton conductivity. Nevertheless, the proton conductivity thereof is developed in a humidified environment and greatly affected by the moisture. Therefore, such a material needs to be used in a humidified environment capable of maintaining a certain extent of moisture content. The proton conductivity decreases, if the moisture content in the material decreases as an environment temperature in which the material is used rises. Thereby, the moisture control is difficult, during the operation of the cell using such an electrolyte material having the proton conductivity in the humidified environment. Particularly, it is difficult to obtain a good proton conductivity in a temperature range more than 100°C.

Japanese Patent Application Laid-Open No. 2003-55457 discloses that a heat resistance and a mechanical property of an electrolyte membrane are improved by using a polymer containing a repeating unit of a structure obtained by polymerizing two benzimidazoles each having a functional group with one sulfonic acid group. Nevertheless, it cannot be said that the proton conductivity is improved.

On the other hand, it is known that a proton conductivity is developed even in no presence of moisture, owing to a combination of: a Brönsted acid having a protogenic property; and a basic molecule having a lone electron-pair (nonbonding electron pair) and whereby having a protophilic property. However, the proton conductive material using such a combination has a lower proton conductivity than that of other proton conductive materials used in the humidified environments. For example, the aforementioned Nafion® exhibits about 0.1 S/cm of the conductivity at 80°C, 100%RH. The proton conductive material based on a combination of the Brönsted acid and the base having a lone electron-pair conventionally exhibits about 2×10⁻³ S/cm at 100°C, in a not-humidified environment (K.D.Kreuer et al., Electorchim. Acta., 43(1997) 1281), and exhibits about 1 ×10⁻² S/cm at 130°C, in a not-humidified environment (Md. A.B.H. Susan et al., Chem Commun., 2003(2003) 938); showing conductivities lower than that of Nafion®, despite their higher measurement temperatures.

It is proposed that the proton conduction based on a combination of a Brönsted acid and a base having a lone electron-pair includes a conduction owing to a movement (migration) of a protonated base and a conduction owing to hopping between bases, and the conduction owing to a movement of a protonated base is dominant in the whole proton conduction (A. Noda et al., J. Phys. Chem. B, 107(2003) 4024). However, there is no knowledge for improving the proton conductivity.

### Disclosure of Invention

### Problems to be solved by the Invention

An object of the present invention is to provide an electrolyte material for a fuel cell having a high proton conductivity in a state without humidification or moisture.

### Means for solving the Problems

An electrolyte material for a fuel cell according to the present invention is characterized in that it has a proton conductive system at least comprising (a) a Brönsted acid and (b) a base having a structure in which one or more groups having their constitutional atoms other than H atom up to 3 are added to a group having a lone electron-pair.

In the present invention, the proton conductivity can be remarkably improved by adding a small group to a group having a lone electron-pair of a base (b) to be combined with a Brönsted acid (a).

As the Brönsted acid (a), a compound having a sulfonic acid group whose proton dissociation constant is high is preferably used.

The base (b) is preferably a base having the molecular weight 300 or less, in order to improve especially the proton conductivity by activating the movement (migration) of the base in the proton conductive system.

As the base having the molecular weight 300 or less, preferably used is a base in which one or more groups are added to a compound selected from a group consisting of imidazole, pyrazole, triazole, pyridine, pyrazine, pyrimidine and pyridazine, and the total number of constitutional atoms other than H atom included in all the added group is 3 or less, because of its high protophilic property.

As the group to be added to the group having a lone electron-pair, at least one kind selected from a hydrocarbon group having 3 or less carbon atoms; a hydroxyl group-containing hydrocarbon group having 3 or less in a total number of carbon and oxygen atoms; a carbonyl group; a carboxyl group; an amino group; an imino group; a nitro group; and an amide group is preferably used.

### Effect of the Invention

According to the electrolyte material of the present invention, the proton conductivity is remarkably improved by adding a relatively small group to a group having a lone electron-pair of a base (b) to be combined with a Brönsted acid (a), in comparison with a state before adding such a small group.

Furthermore, since this electrolyte material develops a high proton conductivity even in a humidified or moistened condition, the moisture control is easy during the operation, in the case that this material is used for a proton conductive portion of a fuel cell, especially as an electrolyte membrane.

### Brief Description of Drawings

FIG. 1 is a graph showing results of conductivity measurements in Example 1.
FIG. 2 is a graph showing results of conductivity measurements in Example 2.
FIG. 3 is a graph showing results of conductivity measurements in Example 3.
FIG. 4 is a graph showing results of conductivity measurements in Example 4.

### Best Mode for Carrying Out the Invention

The electrolyte material for a fuel cell according to the present invention has a proton conductive system made of a combination at least of a Brönsted acid (a) and a base (b) having a lone electron-pair.

As the Brönsted acid (a), various compounds having a protogenic structure in their molecules may be used, such as a known compound having an acid group including a sulfonic acid group, a phosphonic acid group, a carboxylic acid group, a sulfate group and so on. More specifically, it may be a low molecular compound such as a methanesulfonic acid, an ethanesulfonic acid, a benzenesulfonic acid, a trifluoromethanesulfonic acid and so on, or an acidic polymer obtained by incorporating an acid group such as a sulfonic acid group and the like into a polymer such as a polyethersulfone, a polyetheretherketone, a polysulfone or the like. Among them, the Brönsted acid having a sulfonic acid group is preferable, because it has a high proton dissociation constant and thereby can easily obtain a high proton conductivity.

The base (b), which has a lone electron-pair and is to be combined with the Brönsted acid (a), has a group having a protophilic lone electron-pair in the molecule of the base (b), and has a structure in which one or more groups are added to the group having the lone electron-pair, and a total number of constitutional atoms other than H atom included in all the added group is three or less.

In the present invention, the proton conductivity can be remarkably improved, in the case that the proton conduction is developed owing to the combination of the Brönsted acid (a) and the base (b), by incorporating a small group having the constitutional atoms other than H atom limited up to 3 into the group having the lone electron-pair of the base (b).

The reason thereof is understood as follows. In the proton conductive system based on a combination of the Brönsted acid (a) and the base (b), it is said that the proton conduction is developed, owing to the migration of the protonated group having the lone electron-pair of the base (b) in the system, or owing to the hopping movement of a proton between the groups each having a lone electron-pair and existing in the system. As a movement scheme of the group having the lone electron-pair within the system, it is said that there are a scheme in which a relatively low molecular basic compound moves freely (translates) within the system, while maintaining the group having the lone electron-pair, and a scheme in which the group having the lone electron-pair and incorporated into a relatively large sized polymer rotationally moves around a center point or a center axis, that is, a bonding site with the polymer molecule, within a predetermined positional range. In the present invention, if the small group is incorporated into the group having the lone electron-pair of the base (b), the symmetry of the group having the lone electron-pair, that is, the symmetry of a basic property developing site, decreases, and thereby, the mobility of this site increases. As the result, it is considered that the protonated group having the lone electron-pair is promoted to move within the system, so that the proton conductivity is increased.

The group having the lone electron-pair of the base (b) may be any group insofar as it has a lone electron-pair and it is recognizable as a united group (an atomic group). The basic bone structure may be: a nitrogen-containing organic compound such as imidazole, pyrazole, triazole, pyridine, pyrazine, pyrimidine, pyridazine and the like; an oxygen-containing organic compound such as diphenylether, furan, tetrahydrofuran, dimethylether, diethylether and the like, each of which has a lone electron-pair similarly to the nitrogen-containing compound; and a sulfur-containing organic compound such as diphenylsulfone and the like having a lone electron-pair similarly to the nitrogen-containing compound.

Among these nitrogen-containing, oxygen-containing and sulfur-containing organic compounds, a nitrogen-containing aromatic compound is especially preferable in view of the protophilic property and the chemical stability. Even in the case that the basic bone structure of the group having the lone electron-pair originally includes an unsaturated bond, all or a part of the unsaturated bond may be saturated by hydrogenation or the like, insofar as the lone electron-pair providing the protophilic property is not lost.

In the molecular structure of the base (b), the group having the lone electron-pair may be incorporated in various forms. For example, the base (b) may be a basic compound substantially made of the group itself having the lone electron-pair, or may be a polymer obtained by incorporating one or more groups each having a lone electron-pair onto a polymer chain, or may be a polymer containing the group having the lone electron-pair as a repeating unit.

That is, the basic compound substantially made of the group itself having the lone electron-pair may be a compound obtained by incorporating a small substituent into the aforementioned basic bone structure itself such as imidazole, pyrazole, triazole, pyridine, pyrazine, pyrimidine and pyridazine (e.g. 1- or 2-methylimidazole, 2-hydroxyethyl pyridine, etc.). The polymer obtained by incorporating one or more groups each having a lone electron-pair onto a polymer chain may be a polymer obtained by incorporating the aforementioned nitrogen-containing ring such as imidazole and the like onto a polymer chain such as polyethylene, polyvinyl alcohol and the like, as if the nitrogen-containing ring were a pendant head. Furthermore, the polymer containing the group having the lone electron-pair as a repeating unit may be polybenzimidazole, phosphazene and the like.

The number of constitutional atoms other than H atom in the small group to be incorporated into the group having the lone electron-pair should be 3 or less. If the number of constitutional atoms other than H atom in the small group is 4 or more, the proton conductivity decreases. The reason thereof is presumed that the mobility of the group having the lone electron-pair decreases by the influence of the increase of the molecular weight at a portion where the small group is incorporated. Such a small group may be listed as follows. Incidentally, such a small group may be incorporated onto a hetero atom, such as nitrogen and the like, other than carbon atom.
(1) A saturated or unsaturated hydrocarbon group having 3 or less carbon atoms: specifically an alkyl group such as methyl, ethyl, propyl (-CH₂CH₂CH₃, -CH(CH₃)₂) and the like; an alkenyl group such as a vinyl group (-CH=CH₂), an allyl group (-CH₂CH=CH₂), an isopropenyl group (-C(CH₃)=CH₂) and the like; and an ethynyl group represented by the following formula,

   -C≡CH.
(2) A saturated or unsaturated hydrocarbon group containing a hydroxyl group and having the total number of carbon and oxygen atoms up to 3: hydroxymethyl, hydroxyethyl (-CH₂CH₂OH -CH₂(OH)CH₃).
(3) A ketone group (a carbonyl-containing group) (-C(=O)CH₃), a carboxyl group (-COOH).
(4) A primary amine group (an amino group) (-NH₂), a secondary amine group (an imino-containing group) (-NHCH₃, -NHCH₂CH₃).
(5) A nitro group.
(6) An amide group (-CO-NH₂).

Two or more these small groups may be incorporated into one group having the lone electron-pair. In that case, however, the total number of constitutional atoms other than H atom of all small groups should be 3 or less. For example, in the case that the following combination of the small groups is incorporated into one group having the lone electron-pair, the aforementioned total number condition is satisfied: three methyl groups; one methyl group and one ethyl group; one hydroxymethyl group and one methyl group; one vinyl group and one methyl group; three primary amine groups; one primary amine group and one ethyl group; one primary amine group and one methylimino group as a secondary amine group.

As described above, it is obviously preferable that the mobility of the group having the lone electron-pair of the aforementioned base (b), that is, the mobility of the basic property developing site, is high, in order to improve the proton conductivity in the proton conductive system used in the present invention.

If the base (b) is a low molecule and can move freely within the proton conductive system, the translation of the group having the lone electron-pair becomes active. It is considered that this translation especially contributes to the improvement of the proton conductivity. Therefore, from the viewpoint of improving the proton conductivity, it is preferable that the molecular weight of the base (b) is low, particularly 300 or less. From the same viewpoint, it is preferable that the base (b) is not a polymer, but the basic compound substantially made of the group itself having the lone electron-pair. The molecular weight of the base (b) can be determined by any method including a gel partition chromatography, an osmotic pressure method, a light scattering method, a viscosity method and so on. If the base (b) is a polymer, the molecular weight of the base (b) is a weight-average molecular weight.

Furthermore, in the case that the group having the lone electron-pair, that is, the basic property developing site, exists in the structure of the polymer molecule, it is considered that the more the rotational movement of the group having the lone electron-pair becomes active, the more the proton conductivity is improved. In this case, therefore, from the viewpoint of improving the proton conductivity, it is preferable that the group having the lone electron-pair is positioned at a tip of a side chain branched from a main chain of the polymer. From the same viewpoint, it is preferable that the group having the lone electron-pair and the polymer chain are rotatably bonded (e.g. a single bond such as saturated alkane, ether bond or the like).

In the present invention, the proton conductive system is made of a combination of the aforementioned Brönsted acid (a), the aforementioned base (b) and, if needed, other components or materials. The expression herein "the proton conductive system is made of" means that a system capable of generating the proton conduction is made owing to the coexistence of the acid group of the Brönsted acid and the group having the lone electron-pair (a basic group) of the base. As a method of making such a system, a method of blending the Brönsted acid (a) and the base (b), which are independent molecules of each other, is typical. However, other methods may be employed. For example, a polymer having both the acid group of the Brönsted acid and the group having the lone electron-pair may be synthesized and used.

The mixing ratio of the Brönsted acid (a) and the base (b) is not limited to any special ratio. Nevertheless, in many cases, it is preferable that the acid (a) and the base (b) are not mixed at their respective neutralization equivalents, because in general they form a salt at their respective neutralization equivalents, resulting in the insufficiently improvement of the proton conductivity.

In the present invention, an electrolyte material is prepared by mixing or reacting the Brönsted acid (a), the base (b) and, if needed, other components or materials in an appropriate procedure. The obtained electrolyte material is used for forming a proton conductive portion of a fuel cell, such as a solid electrolyte membrane, an electrode catalyst layer or the like, especially used as a forming material for the solid electrolyte membrane.

In the case that the electrolyte material of the present invention is used as a solid electrolyte membrane, if either one of the Brönsted acid (a) or the base (b) does not have the ability sufficiently to form a membrane, a solid membrane can be formed by using another one as a binder or a support for impregnation. For example, if a low molecular base (b) having a low ability to form a membrane is selected from the viewpoint of improving the proton conductivity, an acidic polymer having a high ability sufficiently to form a membrane is used as the Brönsted acid (a). The solid electrolyte membrane can be obtained from the electrolyte material of the present invention, by forming such an acidic polymer into a polymer membrane in advance, and impregnating it with the low molecular base (b), or by mixing and dissolving the low molecular base (b) in a solution or molten liquid of the acidic polymer and forming this into a solid membrane. Furthermore, the solid electrolyte membrane may be formed from the electrolyte material of the present invention, by using a polymer, other than the Brönsted acid (a) and the base (b), as a binder or a support for impregnation.

Other components or materials may be used as appropriate for the electrolyte material for a fuel cell of the present invention.

In the electrolyte material of the present invention, the relatively small group is added to the group having the lone electron-pair of the base (b) to be combined with the Brönsted acid (a), and thereby the symmetry of the group having the lone electron-pair, that is, the symmetry of the basic property developing site, decreases, resulting in the improved mobility. Therefore the proton conductivity is remarkably improved in comparison with the state before the small group is added.

Additionally, this electrolyte material is made of a combination of the Brönsted acid (a) and the base (b) having the lone electron-pair, and exhibits a high proton conductivity even in a state without humidification or moisture. Therefore, in the case that this material is used for a proton conductive portion of a fuel cell, particularly as an electrolyte membrane, a moisture control is easy during the operation of the cell.

### Examples

Examples are shown below. The mixing ratios used in Examples are molar ratios.

### (Method of determining Conductivity)

In the following Examples, the conductivities are determined by an AC impedance (alternating-current impedance) method. The measurement of the conductivity is conducted within a thermostatic chamber in which the temperature is controlled, without atmosphere control and humidification. Thereby, relative humidities at high temperatures (80°C, 120°C) were very low. Particularly, it was observed that the relative humidity (RH) was 1% at 120°C.

### (Example 1)

A mixture of pyridine (1a) and methanesulfonic acid (CH₃SO₃H) was prepared (the mixing ratio was 1:3), and the conductivities were measured at each temperature, 20 °C , 80 °C and 120 °C . As the result, the conductivities at 20 °C and 80 °C were below a lower limit of the measurement (<10⁻⁷ S/cm), and the conductivity at 120°C was 3×10⁻⁴ S/cm.

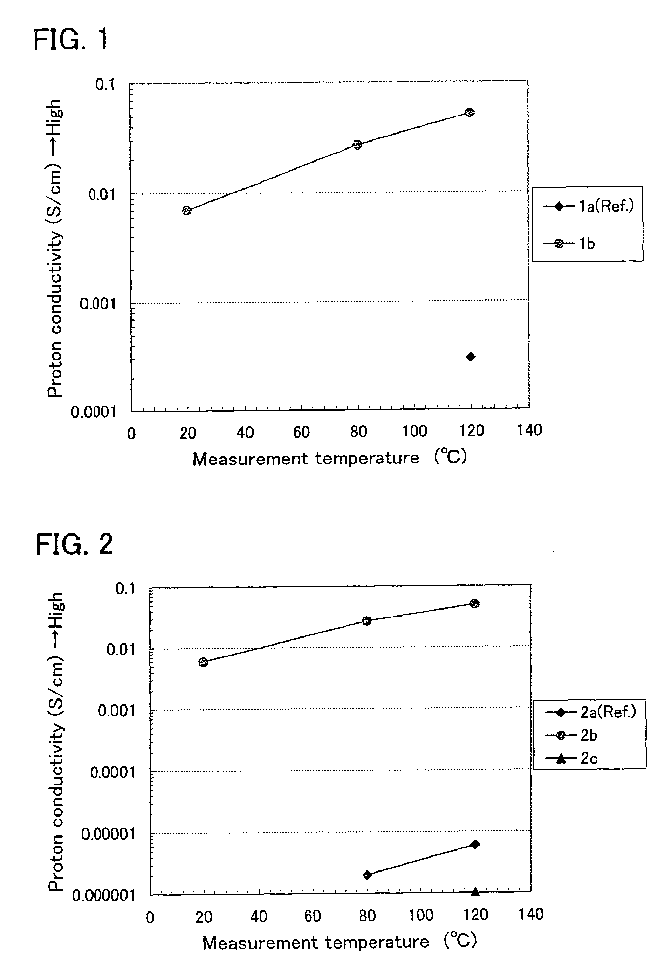

In the case of using a mixture (the mixing ratio was 1:3) of methanesulfonic acid and 2-(2-hydroxyethyl)pyridine (1b) in which a hydroxyethyl group (-CH₂CH₂OH) is added to pyridine, instead of using the pyridine, it was observed that the conductivities were remarkably improved at all measurement temperatures. Specifically, the conductivity was 0.007 S/cm at 20°C, and the conductivities at 80°C and 120°C were 0.027 S/cm and 0.052 S/cm, respectively. These measurement results are shown in FIG. 1.

Namely, the conductivity was improved more than 100 times by using the compound (1b) in which a hydroxyethyl group is added to the pyridine (1a).

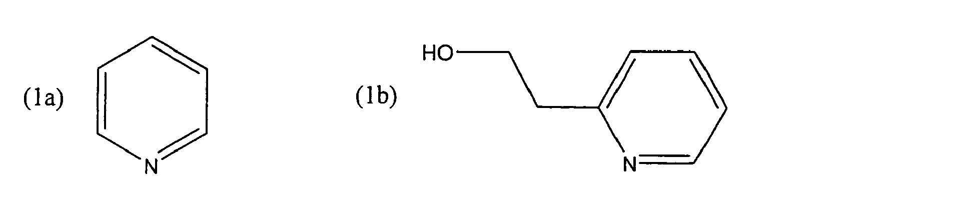

### (Example 2)

The results of the conductivity measurements are shown in Table 1 and FIG. 2, in respective cases that imidazole (2a), 2-methylimidazole (2b), in which a methyl group (-CH₃) is added to imidazole, and benzimidazole (2c), in which a benzene ring is condensed to an imidazole ring, were mixed with methanesulfonic acid, respectively (the respective mixing ratios were 1:3).

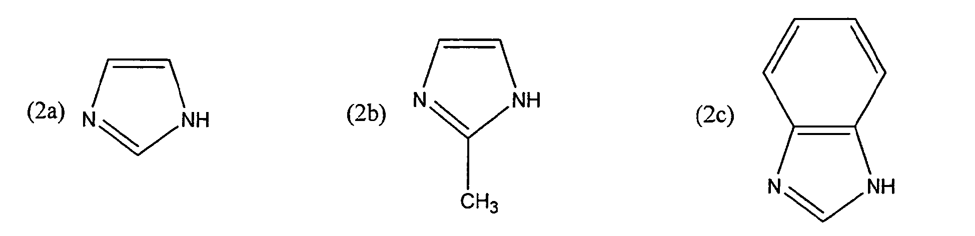

**Table 1 Conductivities (S/cm) of mixtures at each temperature**

| Mixture | Temperature | | |
|---|---|---|---|
| | 20°C | 80°C | 120°C |
| imidazole + methanesulfonic acid | ND | 2×10⁻⁶ | 6×10⁻⁶ |
| 2-methylimidazole + methanesulfonic acid | 0.006 | 0.027 | 0.050 |
| benzimidazole + methanesulfonic acid | ND | ND | 1×10⁻⁶ |

In this case, owing to adding the methyl group, the conductivity was improved about 10000 times. However, in the case of benzimidazole, the conductivity was similar to or less than that of imidazole having no functional group. It is important that the number of atoms (other than H atom) of the functional group to be added is 3 or less.

Furthermore, in the case that the respective mixing ratios were 3:1, it was observed that the conductivities of respective mixtures measured under the same condition as Example 2 were different only about 10% from conductivities in Example 2.

### (Example 3)

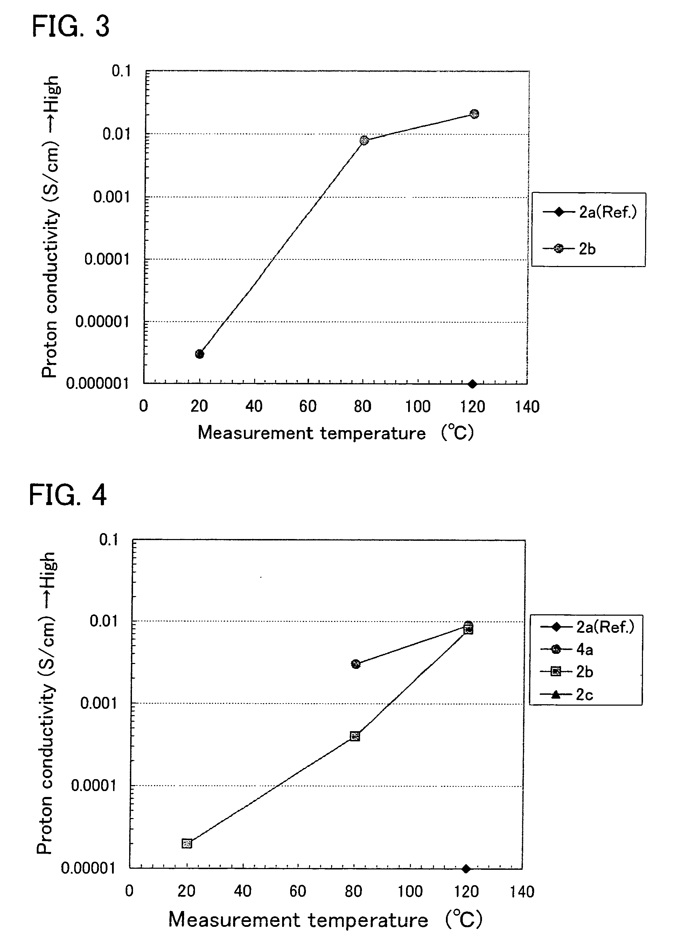

The results of the conductivity measurements are shown in Table 2 and FIG. 3, with regard to a mixture (the mixing ratio was 1:1) of imidazole (2a as described above) and ethanesulfonic acid (CH₃CH₂SO₃H), and a mixture (the mixing ratio was 1:1) of 2-methylimidazole (2b as described above) and ethanesulfonic acid, respectively.

**Table 2 Conductivities (S/cm) of mixtures at each temperature**

| Mixture | Temperature | | |
|---|---|---|---|
| | 20°C | 80°C | 120°C |
| imidazole + ethanesulfonic acid | ND | ND | 1×10⁻⁶ |
| 2-methylimidazole + ethanesulfonic acid | 3×10⁻⁶ | 0.008 | 0.021 |

In this case, owing to adding the methyl group, the conductivities were improved more than 4 digits (more than 10⁴ times).

### (Example 4)

The results of the conductivity measurements are shown in Table 3 and FIG. 4, in respective cases that imidazole (2a as described above), 1-methylimidazole (4a), 2-methylimidazole (2b as described above), and benzimidazole (2c as described above) were mixed with p-toluenesulfonic acid (4b), respectively (the respective mixing ratios were 1:3).

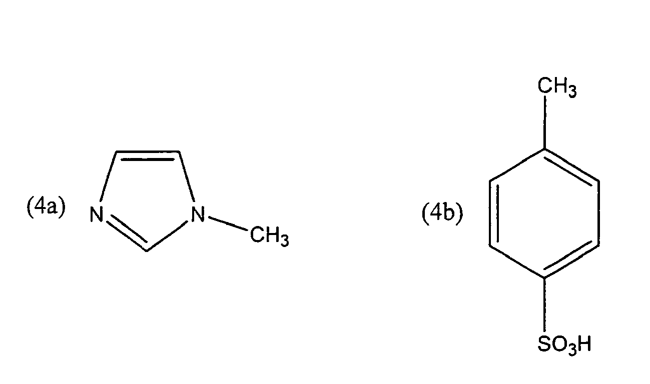

**Table 3 Conductivities (S/cm) of the mixtures at each temperature**

| Mixture | Temperature | | |
|---|---|---|---|
| | 20°C | 80°C | 120°C |
| imidazole + p-toluenesulfonic acid | ND | ND | 1×10⁻⁵ |
| 1-methylimidazole + p-toluenesulfonic acid | ND | 0.003 | 0.009 |
| 2-methylimidazole + p-toluenesulfonic acid | 2×10⁻⁵ | 4×10⁻⁴ | 0.008 |
| benzimidazole + p-toluenesulfonic acid | ND | ND | ND |

Regardless of what kind of the acid was used, the effect of adding the group on the imidazole ring did not change. Even in this case, the conductivities were improved about 3 digits (about 10³ times). Furthermore, although the sites to which the group were added were different between the 1-methylimidazole and the 2-methylimidazole, the almost same effects were obtained. Furthermore, the reason why the conductivity is low in the case of the benzimidazole in which the large group is added is the same as Example 2.

## Claims

1. An electrolyte material for a fuel cell having a proton conductive system at least comprising (a) a Brönsted acid and (b) a base having a lone electron-pair, **characterized in that**
the base (b) has a structure in which one or more groups are added to a group having the lone electron-pair, and a total number of constitutional atoms other than H atom included in all the added group is three or less.

2. An electrolyte material for a fuel cell according to claim 1, wherein
the Brönsted acid (a) is a compound having a sulfonic acid group.

3. An electrolyte material for a fuel cell according to claim 1 or 2, wherein
the base (b) is a base having a molecular weight of 300 or less.

4. An electrolyte material for a fuel cell according to claim 3, wherein
the base having the molecular weight of 300 or less comprises at least one kind of base having a structure in which one or more groups are added to a compound selected from a group consisting of imidazole, pyrazole, triazole, pyridine, pyrazine, pyrimidine and pyridazine, and a total number of constitutional atoms other than H atom included in all the added group is three or less.

5. An electrolyte material for a fuel cell according to any one of claims 1 to 4, wherein
the group to be added to the group having the lone electron-pair is at least one kind selected from: a hydrocarbon group having 3 or less carbon atoms; a hydroxyl group-containing hydrocarbon group having 3 or less in a total number of carbon and oxygen atoms; a carbonyl group; a carboxyl group; an amino group; an imino group; a nitro group; and an amide group.
